# EUROPEAN PATENT APPLICATION

(11) **EP 4 328 516 A1**
(43) Date of publication of application: **28.02.2024**
(21) Application number: 22909561.7
(22) Date of filing: 09.11.2022
(51) Int. Cl.: F24H 9/20

(54) **CONTROL DEVICE, WATER HEATER SYSTEM AND CONTROL METHOD AND APPARATUS THEREFOR, AND STORAGE MEDIUM**

(30) Priority: 24.12.2021 CN 202111608218; 24.12.2021 CN 202111598251
(71) Applicant: Wuhu Midea Kitchen and Bath Appliances Mfg. Co., Ltd., Wuhu, Anhui 241009 (CN)
(72) Inventor: YUAN, Weilong, Wuhu, Anhui 241009 (CN); WEI, Zhongke, Wuhu, Anhui 241009 (CN)
(74) Representative: RGTH
(86) International application number: PCT/CN2022/130780
(87) International publication number: WO 2023/116244

(57) **Abstract**

The present application provides a control device, a water heater system and a control method and apparatus therefor, and a storage medium. The control device comprises: a body; a microwave sensor provided on the body and used for acquiring microwave data; and a controller provided in the body, connected to the microwave sensor, and used for determining user information according to the microwave data and adjusting working parameters of a water heater according to the user information. According to the embodiments of the present application, the control device of the water heater is provided, the microwave sensor of the control device acquires user information, and the identity of a user is determined according to the user information, so that when the user needs to use water, the real-time working parameters of the water heater are automatically adjusted, the user does not need to manually control the work of the water heater, and the use convenience of the water heater is effectively improved.

## Description

The present disclosure claims the benefit of priority to Chinese Patent Application No. 202111608218.1, filed to the Chinese Patent Office on December 24, 2021 and entitled "Controller, water heater assembly and control method and device therefor, and storage medium", which is incorporated in its entirety herein by reference.

The present disclosure claims the benefit of priority to Chinese Patent Application No. 202111598251.0, filed to the Chinese Patent Office on December 24, 2021 and entitled "Control device, water heater system and control method and apparatus therefor, and storage medium", which is incorporated in its entirety herein by reference.

### FIELD

The present disclosure relates to the field of water heaters, and particularly relates to a control device, a water heater system and a control method and device therefor, and a storage medium.

### BACKGROUND

In the related art, water heaters such as wall-mounted gas boilers supplies hot water for a whole house, to satisfy household water demand. Such water heaters are generally arranged at balconies, kitchens, etc. Water mixing valves are used to adjust water temperature before water is used.

However, the water mixing valves are incapable of accurate temperature control due to their limited capacity to adjust water temperature. Moreover, the water temperature can be accurately adjusted only when adjustment on the water heaters is performed by users, which is fairly inconvenient.

### SUMMARY

The present disclosure aims to solve at least one of the problems in the prior art or the related art.

Therefore, a first aspect of the present disclosure provides a control device for a water heater.

A second aspect of the present disclosure provides a control device for a water heater.

A third aspect of the present disclosure provides a water heater system.

A fourth aspect of the present disclosure provides a control method for a water heater system.

A fifth aspect of the present disclosure provides a control method for a water heater system.

A sixth aspect of the present disclosure provides a control unit for a water heater system.

A seventh aspect of the present disclosure provides a control unit for a water heater system.

An eighth aspect of the present disclosure provides a control unit for a water heater system.

A ninth aspect of the present disclosure provides a computer-readable storage medium.

A tenth aspect of the present disclosure provides another water heater system.

In view of this, a first aspect of the present disclosure provides a control device for a water heater. The control device comprises a body; a microwave sensor, which is arranged on the body and collects microwave data; and a controller, which is arranged in the body, connected to the microwave sensor and determines user information based on the microwave data and adjusts a working parameter of the water heater based on the user information.

A second aspect of the present disclosure provides a control device for a water heater. The control device comprises: a body; an image sensor, which is arranged on the body and configured to acquire user image information, where the user image information comprises user features; and a controller, which is arranged in the body, connected to the image sensor, configured to control, based on the user image information, the water heater to work, and configured to adjust a working parameter of the water heater based on the user features.

A third aspect of the present disclosure provides a water heater system. The water heater system comprises a water heater; and the control device for a water heater provided in any one of the above embodiments, which carries out data and instruction mutual interaction with the water heater.

A fourth aspect of the present disclosure provides a control method for a water heater system. The water heater system comprises a control device, the control device comprises a microwave sensor, and the control method comprises: controlling the microwave sensor to collect microwave data of a water consumption area; and determining user information based on the microwave data, and adjusting a working parameter of the water heater based on the user information.

A fifth aspect of the present disclosure provides a control method for a water heater system. The control method comprises: collecting user image information, where the user image information comprises user features; controlling, in response to the user image information, a water heater to work; and adjusting a working parameter of the water heater based on the user features.

A sixth aspect of the present disclosure provides a control unit for a water heater system. The control device comprises: a collection module, which is configured to control a microwave sensor to collect microwave data of a water consumption area; and an adjustment module, which is configured to determine user information based on the microwave data and adjust a working parameter of the water heater based on the user information.

A seventh aspect of the present disclosure provides a control unit for a water heater system. The control device comprises: a collection module, which is configured to collect user image information, where the user image information comprises user features; a control device, which is configured to control, based on the user image information, the water heater to work; and an adjustment module, which is configured to adjust a working parameter of the water heater based on the user features.

An eighth aspect of the present disclosure provides a control unit for a water heater system. The control device comprises: a memory, which is configured to store a program or an instruction; and a processor, which is configured to implement steps of the control method for a water heater system provided in any one of the above embodiments when executing the program or the instruction. Therefore, the control unit for a water heater system further comprises all beneficial effects of the control method for a water heater system provided in any one of the above embodiments, which will not be repeated herein for avoidance of repetition.

A ninth aspect of the present disclosure provides a computer-readable storage medium. The computer-readable storage medium stores a program or an instruction, where the program or the instruction implements steps of the control method for a water heater system provided in any one of the above embodiments when executed by a processor. Therefore, the computer-readable storage medium further comprises all beneficial effects of the control method for a water heater system provided in any one of the above embodiments, which will not be repeated herein for avoidance of repetition.

A tenth aspect of the present disclosure provides a water heater system. The water heater system comprises a control unit for a water heater system provided in any one of the above embodiments; and/or the computer-readable storage medium provided in any one of the above embodiments. Therefore, the water heater system further comprises all beneficial effects of the control unit for a water heater system provided in any one of the above embodiments and/or the computer-readable storage medium provided in any one of the above embodiments, which will not be repeated herein for avoidance of repetition.

### BRIEF DESCRIPTION OF THE DRAWINGS

The above and/or additional aspects and advantages of the present disclosure will become obvious and easy to understand from description of embodiments in combination with accompanying drawings as follows:
FIG. 1 shows a first schematic structural diagram of a control device according to an embodiment of the present disclosure;
FIG. 2 shows a second schematic structural diagram of a control device according to an embodiment of the present disclosure;
FIG. 3 shows a third schematic structural diagram of a control device according to an embodiment of the present disclosure;
FIG. 4 shows a structural block diagram of a water heater system according to an embodiment of the present disclosure;
FIG. 5 shows a first schematic arrangement diagram of a control unit for a water heater system according to an embodiment of the present disclosure;
FIG. 6 shows a second schematic arrangement diagram of a control unit for a water heater system according to an embodiment of the present disclosure;
FIG. 7 shows a first flow diagram of a control method according to an embodiment of the present disclosure;
FIG. 8 shows a second flow diagram of a control method according to an embodiment of the present disclosure;
FIG. 9 shows a first structural block diagram of a control device according to an embodiment of the present disclosure; and
FIG. 10 shows a second structural block diagram of a control device according to an embodiment of the present disclosure.

### Reference numerals:

100 control device, 102 body, 104 microwave sensor, 105 image sensor, 106 controller, 108 first communication assembly, 110 communication line, and 112 second communication assembly.

### DETAILED DESCRIPTION OF THE DISCLOSURE

In order to make the above objective, features and advantages of the present disclosure more comprehensible, the present disclosure will be further described in detail below in combination with accompanying drawings and particular embodiments. It should be noted that embodiments of the present disclosure and features in the embodiments can be combined with one another if there is no conflict.

Many details are set forth in the following description to facilitate a full understanding of the present disclosure, but the present disclosure can further be implemented in other ways different from those described herein, and therefore the scope of protection of the present disclosure is not limited by the particular embodiments disclosed below.

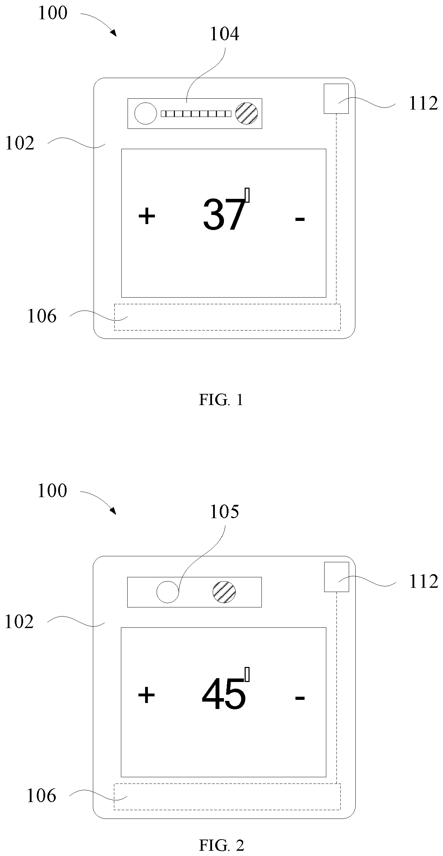

A control device, a water heater system and a control method and device therefor, and a storage medium according to some embodiments of the present disclosure are described below with reference to FIGs. 1-10.

In some embodiments of the present disclosure, a control device for a water heater is provided. FIG. 1 shows a first schematic structural diagram of a control device according to an embodiment of the present disclosure. As shown in FIG. 1, the control device 100 comprises:
a body 102; a microwave sensor 104, which is arranged on the body 102 and configured to collect microwave data; and a controller 106, which is arranged in the body 102, connected to the microwave sensor 104 and configured to determine user information based on the microwave data and adjust a working parameter of a water heater based on the user information.

In an embodiment of the present disclosure, the control device 100 for a water heater is configured to control operation and work of the water heater, comprising controlling startup and shutdown of the water heater or adjusting a working parameter of the water heater. The working parameters comprise a target outlet water temperature of the water heater, a parameter indicating whether to start heating water supply, a parameter indicating whether to start a zero cold water function, etc.

The control device 100 may be arranged in or near a water consumption area. In an embodiment, the water consumption area comprises an area where a user uses hot water provided by a water heater, such as a toilet, a bathroom, a washbasin and a kitchen sink. By arranging the control device in these water consumption areas, the user can conveniently adjust a water temperature, a function switch and other working parameters of the water heater at any time.

A microwave sensor 104 is further arranged on the control device 100. In an embodiment, the microwave sensor 104 belongs to a microwave radar apparatus, such as a millimeter wave radar. By the microwave sensor 104, information of a moving object, that is, information of a human body can be detected and a movement direction and a movement speed of the human body can be obtained. Moreover, a distance between the human body and the control device 100, and other information of the human body, such as a height and a figure can be obtained and user information corresponding to the human body can be obtained.

Since the control device 100 is arranged in or near the water consumption area, after receiving the user information, the control device 100 can determine that the user arrives at the water consumption area, which represents that the user may have a water demand. In this case, the control device 100 controls, on the basis of the user information, the water heater to start working. In a case that the water heater is in a standby state, after receiving user information, the control device 100 controls the water heater to enter a working state and hot water can be produced.

In a case that the water heater is already in the working state, after receiving user information, the water heater can enter a mode of preparing for water supply and turns on a switch of the zero cold water function, for example. The zero cold water function refers to a function that a circulating pump is arranged on the water heater, remaining water in a hot water pipeline between the water heater and the water consumption area where the user is located is pumped back into the water heater by the circulating pump to be reheated, and new hot water produced by a wall-mounted gas boiler is continuously injected into the hot water pipeline between the water heater and the water consumption area where the user is located and remaining water in the pipeline can be circularly replaced with newly produced hot water. Therefore, when the user turns on a faucet or a shower, water firstly flowing out is hot water satisfying demand of the user, rather than cold water having a temperature lowered due to too long retention time, and the zero cold water function is achieved.

Moreover, after acquiring the user information, the controller 106 identifies an identity of a user currently approaching or located in the water consumption area by the user information, determines, in combination with historical water consumption habits (such as a water temperature and an outlet water flow quantity) of the user and current environment information (such as a season, time in a day and an indoor temperature) and on the basis of a database generated by big data, working parameters most according with water consumption habits of the user, and adjusts current working parameters of the water heater.

Therefore, when different users use hot water, no user is required to manually set the working parameters of the water heater, and hot water according with usage habits of the user can be obtained by directly turning on the faucet.

In an embodiment, for instance, the control device 100 for a water heater is arranged at a door of a bathroom. Since the bathroom generally employs a dry-wet separation design, the control device can be arranged at a dry area outside a wet area of the bathroom or at a door of the dry area. When a user arrives at the dry area, the control device 100 can detect user information of the user and determine that the user needs to take a bath. In this case, since operating parameters of the water heater are set in advance, the user is not required to manually adjust the water heater, and can directly enter a bath at a proper water temperature. Moreover, the microwave sensor 104 does not acquire an image of the user and personal privacy of the user can be protected.

According to an embodiment of the present disclosure, the control device 100 for a water heater is arranged, the user information is collected by the microwave sensor 104 of the control device 100, and the identity of the user is determined based on the user information and real-time working parameters of the water heater can be automatically adjusted when the user needs water, the user is not required to manually control work of the water heater, and convenience of using the water heater is effectively improved.

In some embodiments of the present disclosure, the user information comprises user features, and the user features comprise a movement feature, a figure feature, a heart rate feature and/or a respiration feature.

In an embodiment of the present disclosure, the user information comprises user features corresponding to a user, and the user features comprise a movement feature of the user, a figure feature of the user, a heart rate feature of the user, and a respiration feature of the user.

In an embodiment, the microwave sensor 104 belongs to a microwave radar apparatus, such as a millimeter wave radar. The microwave sensor 104 can detect information of a moving object. That is, when a human body approaches or passes the control device 100, movement data of the human body, such as a movement direction and a movement speed, and contour data of the human body, such as height data and figure data can be acquired by the microwave sensor 104.

Different users have different figures and different walking features. Therefore, an identity of a user near the water consumption area can be accurately identified by acquiring movement features comprising a movement direction, a movement speed, etc. and combining figure features such as height data and figure data.

Moreover, respiration and heartbeats of different users can cause micro vibrations of bodies, and frequencies and amplitudes of the micro vibrations caused by the respiration and heartbeats are different. Further, the microwave sensor 104 such as a millimeter wave radar, in an embodiment, a frequency modulated continuous wave (FMCW) microwave sensor 104 has high detection accuracy, and these micro vibrations are expressed in forms of waveform changes in detection data of the FMCW microwave sensor 104.

Therefore, by collecting and analyzing a waveform of reflected signals, a heart rate, respiration and other data of a target human body can be obtained, that is, a heart rate feature and a respiration feature can be obtained.

The heart rate features and respiration features of different users are further different. Therefore, based on the acquired movement feature and figure feature and in combination with the heart rate feature and the respiration feature, the identity of the user passing the control device 100 can be extremely accurately acquired, and user information can be determined. The working parameters most according with water consumption habits of the user are determined based on the user information, and current working parameters of the water heater are automatically adjusted and the user is not required to manually control work of the water heater, and convenience of using the water heater is effectively improved.

In some embodiments of the present disclosure, a control device for a water heater is provided. FIG. 2 shows a second schematic structural diagram of a control device according to an embodiment of the present disclosure. As shown in FIG. 2, the control device 100 comprises:
a body 102; an image sensor 105, which is arranged on the body 102 and configured to acquire user image information, where the user image information comprises user features; and a controller 106, which is arranged in the body 102, connected to the image sensor 105, configured to control, based on the user image information, the water heater to work, and configured to adjust a working parameter of the water heater based on the user features.

In an embodiment of the present disclosure, the control device 100 for a water heater is configured to control operation and work of the water heater, comprising controlling startup and shutdown of the water heater or adjusting a working parameter of the water heater. The working parameters comprise a target outlet water temperature of the water heater, a parameter indicating whether to start heating water supply, a parameter indicating whether to start a zero cold water function, etc.

The control device 100 may be arranged in or near a water consumption area. In an embodiment, the water consumption area comprises an area where a user uses hot water provided by a water heater, such as a toilet, a bathroom, a washbasin and a kitchen sink. By arranging the control device 100 in these water consumption areas, the user can conveniently adjust a water temperature, a function switch and other working parameters of the water heater at any time.

An image sensor 105 is further arranged on the control device 100, and the image sensor 105 can collect information of a human body. When a human body passes the control device 100, the image sensor 105 can generate corresponding signals and user image information comprising user features is sent to the controller 106.

Since the controller 106 is arranged in or near the water consumption area, after receiving the user image information, the controller 106 can determine that the user arrives at the water consumption area, which represents that the user may have a water demand. In this case, the controller 106 controls, on the basis of the user information, the water heater to start working. In a case that the water heater is in a standby state, after receiving user image information, the controller 106 controls the water heater to enter a working state and hot water can be produced.

In a case that the water heater is already in the working state, after the user image information is received, the water heater can enter a mode of preparing for water supply and turns on a switch of the zero cold water function, for example. The zero cold water function refers to a function that a circulating pump is arranged on the water heater, remaining water in a hot water pipeline between the water heater and the water consumption area where the user is located is pumped back into the water heater by the circulating pump to be reheated, and new hot water produced by a wall-mounted gas boiler is continuously injected into the hot water pipeline between the water heater and the water consumption area where the user is located and remaining water in the pipeline can be circularly replaced with newly produced hot water. Therefore, when the user turns on a faucet or a shower, water firstly flowing out is hot water satisfying demand of the user, rather than cold water having a temperature lowered due to too long retention time, and the zero cold water function is achieved.

Moreover, after receiving the user image information, the controller 106 identifies an identity of a user currently approaching or located in the water consumption area by user features comprised in the user image information, determines, in combination with historical water consumption habits (such as a water temperature and an outlet water flow quantity) of the user and current environment information (such as a season, time in a day and an indoor temperature) and on the basis of a database generated by big data, working parameters most according with water consumption habits of the user, and adjusts current working parameters of the water heater.

Therefore, when different users use hot water, no user is required to manually set the working parameters of the water heater, and hot water according with usage habits of the user can be obtained by directly turning on the faucet.

In an embodiment, for instance, the control device 100 for a water heater is arranged at a door of a bathroom. Since the bathroom generally employs a dry-wet separation design, the control device 100 can be arranged at a dry area outside a wet area of the bathroom or at a door of the dry area. When the user arrives at the dry area, the controller 106 can detect the user image information of the user and determine that the user needs to take a bath. In this case, since operating parameters of the water heater are set in advance, the user is not required to manually adjust the water heater, and can directly enter a bath at a proper water temperature. Moreover, the controller 106 is located outside the wet area, and the image sensor 105 does not collect data in a process that the user takes a bath and personal privacy of the user can be protected.

According to an embodiment of the present disclosure, the control device 100 for a water heater is arranged, and an identity of a user is determined based on the user image information and real-time working parameters of the water heater can be automatically adjusted when a user needs water, the user is not required to manually control work of the water heater, and convenience of using the water heater is effectively improved.

In some embodiments of the present disclosure, the user features comprise a face feature, a gait feature and/or a figure feature.

In an embodiment of the present disclosure, the image sensor 105 may be a natural light image sensor 105, to acquire photo or video information of the human body, and the image sensor 105 may further be an infrared image sensor 105, to acquire an infrared photo of the human body.

The user features comprise a face feature. After the image sensor 105 captures an image comprising a human body, face recognition is carried out on a human face in the image, and the identity of the user is determined based on a result of the face recognition and working parameters of the water heater matching the identity of the user can be obtained.

The user features further comprise a gait feature. In an embodiment, the gait feature refers to information such as a working posture, a stride and a stride frequency. When a human body passes the control device 100, walking videos of the human body are collected, and gait data of the human body is analyzed and an identity of a user corresponding to the gait feature can be obtained. Therefore, in a case that a front face of the user cannot be captured, it is still ensured that the identity of the user can be accurately identified and working parameters of the water heater matching the identity of the user can be obtained.

The user features further comprise a figure feature. In an embodiment, the figure feature comprises body information such as a height and a shoulder width of the user. After the image sensor 105 captures an image comprising a human body, image recognition is carried out on the human body and a corresponding figure feature can be obtained. Further, an identity of a user can be determined based on the figure feature, and working parameters of the water heater matching the identity of the user can be obtained.

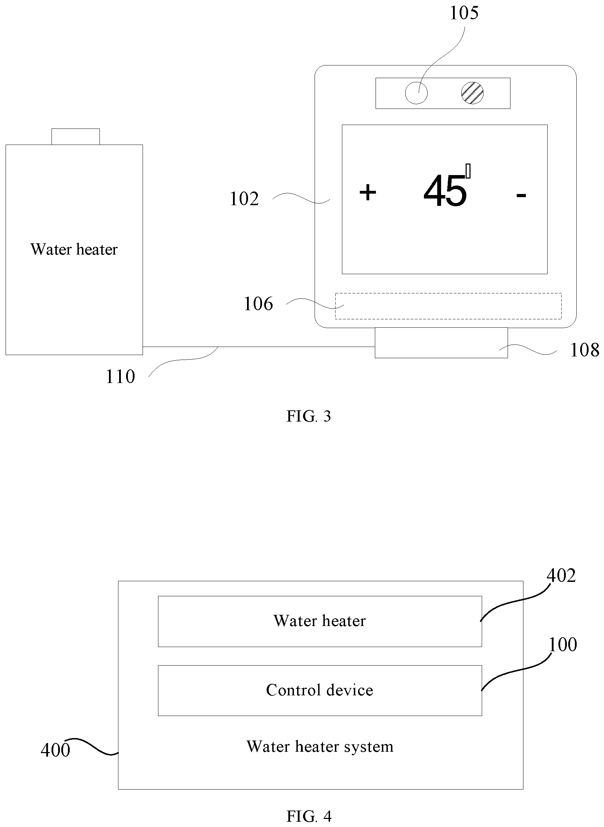

In some embodiments of the present disclosure, FIG. 3 shows a third schematic structural diagram of a control device 100 according to an embodiment of the present disclosure. As shown in FIG. 3, the control device 100 further comprises: a first communication device 108, which is connected to the controller 106; and a communication line 110, which is connected to the first communication device 108 and the water heater.

In an embodiment of the present disclosure, the control device 100 is provided with the first communication device 108 and the communication line 110, and the control device 100 is in wired connection to the water heater by the first communication device and the communication line 110. In an embodiment, the first communication device 108 may be a communication device of an RS232 protocol or an Ethernet communication device. A first end of the communication line 110 is connected to the first communication device 108, and a second end of the communication line 110 is connected to the water heater and data and signals can be transmitted between the water heater and the control device 100, and real-time working parameters of the water heater can be transmitted to the control device 100 to be displayed. Moreover, when a user adjusts the working parameters of the water heater, an adjustment instruction is sent to the water heater and the water heater can be controlled to change the working parameters.

Data communication between the control device 100 and the water heater is achieved through a wired connection method, and interference is less, cost is lower and stability is better.

In some embodiments of the present disclosure, the control device 100 further comprises a second communication device 112, which is connected to the controller 106 and configured to establish a wireless communication channel with the water heater.

In an embodiment of the present disclosure, the control device 100 achieves wireless data and instruction mutual interaction with the water heater by the second communication device 112. In an embodiment, the second communication device 112 is a wireless communication device, and establishes a channel through wireless communication, to achieve wireless connection between the control device 100 and the water heater. Correspondingly, the water heater is further provided with a corresponding wireless communication device. In an embodiment, the control device 100 may directly establish a wireless communication channel with the second communication device 112. In this case, the water heater sends current working parameters thereof to the control device 100 by the wireless channel for display. When the control device 100 receives adjustment input, an adjustment instruction is directly sent to the water heater by the wireless channel, and the water heater changes the working parameters based on the adjustment instruction.

In another embodiment, the control device 100 and the water heater may each establish connections with a server or a gateway, the water heater sends current working parameters thereof to the server or the gateway for storage, and the control device 100 sends a query request to the server or the gateway and the working parameters stored in the server or the gateway can be acquired and displayed. After receiving the adjustment input from the user, the control device 100 sends the adjustment instruction to the server or gateway. The adjustment instruction carries apparatus identification information of the water heater, and the server or gateway sends the adjustment instruction to the water heater based on the apparatus identification information and the water heater can be controlled to change the working parameters.

Data communication between the control device 100 and the water heater is achieved through a wireless connection method, and no wiring is required, mounting is simple and usage is more convenient.

In some embodiments of the present disclosure, the second communication device 112 comprises a Bluetooth communication device, a Wi-Fi communication device and a radio frequency communication device.

In an embodiment of the present disclosure, the second communication device 112 may be a Bluetooth communication device. In this case, a corresponding Bluetooth communication device is arranged in the water heater, and data and instruction mutual interaction is carried out between the control device 100 and the water heater through Bluetooth connection.

The second communication device 112 may further be a Wi-Fi communication device. In this case, a corresponding Wi-Fi communication device is arranged in the water heater, and data and instruction mutual interaction may be carried out between the control device 100 and the water heater through Wi-Fi direct connection, or data transfer may be carried out by a server, gateway or router.

The second communication device 112 may further be a radio frequency communication device, such as a sub-1g radio frequency (RF) communication device. In this case, a corresponding radio frequency communication device is arranged in the water heater, and data and instruction mutual interaction is carried out between the control device 100 and the water heater through apparatus connection.

In some embodiments of the present disclosure, a water heater system is provided. FIG. 4 shows a structural block diagram of the water heater system according to an embodiment of the present disclosure. As shown in FIG. 4, the water heater system 400 comprises a water heater 402; and the control device 100 for a water heater provided in any one of the above embodiments, which carries out data and instruction mutual interaction with the water heater 402.

In an embodiment of the present disclosure, the water heater system in an embodiment of the present disclosure comprises the control device for a water heater provided in any one of the above embodiments, and therefore further comprises all beneficial effects of the control device for a water heater provided in any one of the above embodiments, which will not be repeated herein for avoidance of repetition.

In some embodiments of the present disclosure, the water heater system further comprises: a water outlet assembly, which is connected to the water heater and arranged in a water consumption area; and a control device, which is arranged outside the water consumption area and faces an entrance of the water consumption area.

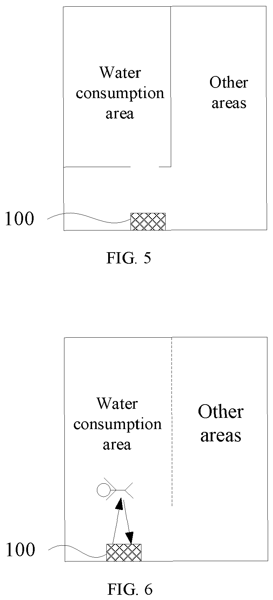

In an embodiment of the present disclosure, the water outlet assembly comprises apparatuses such as a faucet, a heating pipeline and a shower, and is configured to provide hot water for a user. FIG. 5 shows a first schematic arrangement diagram of a control unit for a water heater system according to an embodiment of the present disclosure. As shown in FIG. 5, the control device is arranged near the water consumption area, and an arrangement direction of the control device is towards an entrance of the corresponding water consumption area. Therefore, after receiving the user image information, the control device can determine that the user arrives at the water consumption area, which represents that the user may have a water demand. In this case, the control device controls, on the basis of the user information, the water heater to start working. In a case that the water heater is in a standby state, after receiving user image information, the control device controls the water heater to enter a working state and hot water can be produced.

In a case that the water heater is already in the working state, after the user image information is received, the water heater can enter a mode of preparing for water supply and turns on a switch of the zero cold water function, for example. The zero cold water function refers to a function that a circulating pump is arranged on the water heater, remaining water in a hot water pipeline between the water heater and the water consumption area where the user is located is pumped back into the water heater by the circulating pump to be reheated, and new hot water produced by a wall-mounted gas boiler is continuously injected into the hot water pipeline between the water heater and the water consumption area where the user is located and remaining water in the pipeline can be circularly replaced with newly produced hot water. Therefore, when the user turns on a faucet or a shower, water firstly flowing out is hot water satisfying demand of the user, rather than cold water having a temperature lowered due to too long retention time, and the zero cold water function is achieved.

Moreover, after receiving the user image information, the control device identifies an identity of a user currently approaching or located in the water consumption area by user features comprised in the user image information, determines, in combination with historical water consumption habits (such as a water temperature and an outlet water flow quantity) of the user and current environment information (such as a season, time in a day and an indoor temperature) and on the basis of a database generated by big data, working parameters most according with water consumption habits of the user, and adjusts current working parameters of the water heater.

Therefore, when different users use hot water, no user is required to manually set the working parameters of the water heater, and hot water according with usage habits of the user can be obtained by directly turning on the faucet, and convenience of using the water heater is effectively improved.

In some embodiments of the present disclosure, the water heater system further comprises: a water outlet assembly, which is connected to the water heater and arranged in a water consumption area; and a control device, which faces an entrance of the water consumption area.

In an embodiment of the present disclosure, the water outlet assembly comprises apparatuses such as a faucet, a heating pipeline and a shower, and is configured to provide hot water for a user. FIG. 6 shows a second schematic arrangement diagram of a control device for a water heater according to an embodiment of the present disclosure. As shown in FIG. 6, the control device is arranged near the water consumption area, and an arrangement direction of the control device is towards the corresponding water consumption area. Therefore, after collecting the user information, the control device can determine that the user arrives at the water consumption area, which represents that the user may have a water demand. In this case, the control device controls, on the basis of the user information, the water heater to start working. In a case that the water heater is in a standby state, after collecting user information, the control device controls the water heater to enter a working state and hot water can be produced.

In a case that the water heater is already in the working state, after the user information is collected, the water heater can enter a mode of preparing for water supply and turns on a switch of the zero cold water function, for example. The zero cold water function refers to a function that a circulating pump is arranged on the water heater, remaining water in a hot water pipeline between the water heater and the water consumption area where the user is located is pumped back into the water heater by the circulating pump to be reheated, and new hot water produced by a wall-mounted gas boiler is continuously injected into the hot water pipeline between the water heater and the water consumption area where the user is located and remaining water in the pipeline can be circularly replaced with newly produced hot water. Therefore, when the user turns on a faucet or a shower, water firstly flowing out is hot water satisfying demand of the user, rather than cold water having a temperature lowered due to too long retention time, and the zero cold water function is achieved.

Moreover, after collecting the user information, the control device identifies an identity of a user currently approaching or located in the water consumption area by user features comprised in the user information, determines, in combination with historical water consumption habits (such as a water temperature and an outlet water flow quantity) of the user and current environment information (such as a season, time in a day and an indoor temperature) and on the basis of a database generated by big data, working parameters most according with water consumption habits of the user, and adjusts current working parameters of the water heater.

Therefore, when different users use hot water, no user is required to manually set the working parameters of the water heater, and hot water according with usage habits of the user can be obtained by directly turning on the faucet, and convenience of using the water heater is effectively improved.

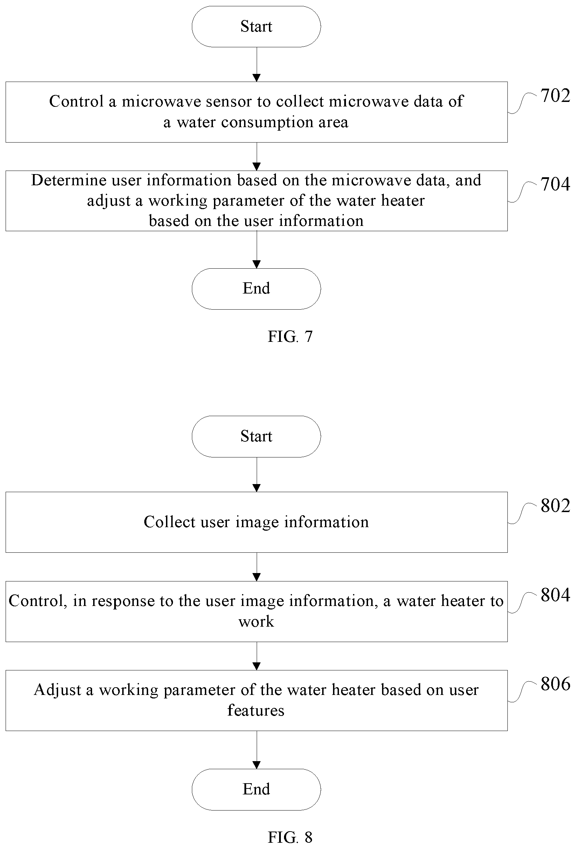

In some embodiments of the present disclosure, a control method for a water heater system is provided. FIG. 7 shows a first flow diagram of a control method according to an embodiment of the present disclosure. As shown in FIG. 7, the method comprises:
step 702: control a microwave sensor to collect microwave data of a water consumption area; and
step 704: determine user information based on the microwave data, and adjust a working parameter of the water heater based on the user information.

In an embodiment of the present disclosure, the control device for a water heater is configured to control operation and work of the water heater, comprising controlling startup and shutdown of the water heater or adjusting a working parameter of the water heater. The working parameters comprise a target outlet water temperature of the water heater, a parameter indicating whether to start heating water supply, a parameter indicating whether to start a zero cold water function, etc.

The control device may be arranged in or near a water consumption area. In an embodiment, the water consumption area comprises an area where a user uses hot water provided by a water heater, such as a toilet, a bathroom, a washbasin and a kitchen sink. By arranging the control device in these water consumption areas, the user can conveniently adjust a water temperature, a function switch and other working parameters of the water heater at any time.

A microwave sensor is further arranged on the control device. In an embodiment, the microwave sensor belongs to a microwave radar apparatus, such as a millimeter wave radar. By the microwave sensor, information of a moving object, that is, information of a human body can be detected. Reflected signals of the water consumption area are collected by the microwave sensor, and when the human body passes, phases of the reflected signals change and a movement direction and a movement speed of the human body can be obtained. Moreover, a distance between the human body and the control device, and other information of the human body, such as a height and a figure can be obtained and user information corresponding to the human body can be obtained.

Since the control device is arranged in or near the water consumption area, after receiving the user information, the control device can determine that the user arrives at the water consumption area, which represents that the user may have a water demand. In this case, the control device controls, on the basis of the user information, the water heater to start working. In a case that the water heater is in a standby state, after receiving user information, the control device controls the water heater to enter a working state and hot water can be produced.

In a case that the water heater is already in the working state, after receiving user information, the water heater can enter a mode of preparing for water supply and turns on a switch of the zero cold water function, for example. The zero cold water function refers to a function that a circulating pump is arranged on the water heater, remaining water in a hot water pipeline between the water heater and the water consumption area where the user is located is pumped back into the water heater by the circulating pump to be reheated, and new hot water produced by a wall-mounted gas boiler is continuously injected into the hot water pipeline between the water heater and the water consumption area where the user is located and remaining water in the pipeline can be circularly replaced with newly produced hot water. Therefore, when the user turns on a faucet or a shower, water firstly flowing out is hot water satisfying demand of the user, rather than cold water having a temperature lowered due to too long retention time, and the zero cold water function is achieved.

Moreover, after acquiring the user information, a main control assembly identifies an identity of a user currently approaching or located in the water consumption area by the user information, determines, in combination with historical water consumption habits (such as a water temperature and an outlet water flow quantity) of the user and current environment information (such as a season, time in a day and an indoor temperature) and on the basis of a database generated by big data, working parameters most according with water consumption habits of the user, and adjusts current working parameters of the water heater.

Therefore, when different users use hot water, no user is required to manually set the working parameters of the water heater, and hot water according with usage habits of the user can be obtained by directly turning on the faucet.

In an embodiment, for instance, the control device for a water heater is arranged at a door of a bathroom. Since the bathroom generally employs a dry-wet separation design, the control device can be arranged at a dry area outside a wet area of the bathroom or at a door of the dry area. When the user arrives at the dry area, the control device can detect the user information of the user and determine that the user needs to take a bath. In this case, since operating parameters of the water heater are set in advance, the user is not required to manually adjust the water heater, and can directly enter a bath at a proper water temperature. Moreover, the microwave sensor does not acquire an image of the user and personal privacy of the user can be protected.

According to an embodiment of the present disclosure, the control device for a water heater is arranged, the user information is collected by the microwave sensor of the control device, and an identity of a user is determined based on the user information and real-time working parameters of the water heater can be automatically adjusted when a user needs water, the user is not required to manually control work of the water heater, and convenience of using the water heater is effectively improved.

In some embodiments of the present disclosure, the step of controlling the microwave sensor to collect microwave data of the water consumption area comprises: control the microwave sensor to emit microwave signals and collect reflected signals of the microwave signals; acquire a phase difference between the reflected signals and the microwave signals; and determine the microwave data based on the waveform of the reflected signals and the phase difference.

In an embodiment of the present disclosure, the microwave sensor belongs to a microwave radar apparatus, such as a millimeter wave radar. Information of a moving object can be detected by the microwave sensor. In an embodiment, the microwave sensor constantly emits microwave signals and receives reflected signals.

There is a certain phase difference between the reflected signals and the emitted microwave signals, and the phase difference can reflect a position of the object reflecting the reflected signals from the microwave sensor. Based on the continuous phase difference between the reflected signals and the microwave signals, movement data and figure data of the human body passing the microwave sensor, that is, passing the control device can be obtained.

Moreover, the waveform of the reflected signals is related to a shape of the object reflecting the signals and whether the object vibrates. Therefore, when the human body reflects the microwave signals, the waveform of the reflected signals change based on vibrations of the human body caused by respiration and movement of the human body.

Therefore, based on the phase difference between the waveform of reflected microwaves and the waveform of emitted microwaves, and the waveform of the reflected signals, feature data of the human body of the user passing or approaching the control device can be accurately reflected and corresponding user information can be determined. An identity of the user can be determined based on the user information, and a working parameter of the water heater can be automatically adjusted based on the identity of the user and the working parameter satisfies current user demand. The user is not required to manually control work of the water heater, and convenience of using the water heater is effectively improved.

In some embodiments of the present disclosure, the step of adjusting a working parameter of the water heater based on the user information comprises: collect environment information, where the environment information comprises environment temperature information and/or time information; determine a target parameter based on the user information and the environment information; and adjust the working parameter based on the target parameter.

In an embodiment of the present disclosure, when the working parameter of the water heater is adjusted, a target parameter is determined based on an environment parameter of a current environment and user information acquired by the control device for a water heater.

In an embodiment, the environment information comprises environment temperature information, such as an indoor temperature and an outdoor temperature. Since the indoor temperature and the outdoor temperature will affect a body temperature of the user, demand of the user for a hot water temperature will change. For instance, if a room temperature is low, the user may expect higher water temperature; and if the room temperature is high, the user may expect lower water temperature.

The environment information further comprises time information, such as time in a day and a month in a year. Different time represents different user states. For instance, in the daytime, when the user may be in a working or living state, the water may be used for work or living, such as water for cleaning objects and cooking, and a required water temperature is lower. When the user may need to rest after washing at night, a required water temperature is high.

Different months represent different seasons, and a user needs different water temperatures in different seasons. For instance, a higher water temperature is required in winter and a lower water temperature is required in summer.

Therefore, in combination with the environment parameter and the user information, actual demand of different users in different scenarios can be accurately reflected and outlet water temperatures of the water heater can always satisfy the actual demand of the users in different situations, and use experience of the water heater can be improved.

In some embodiments of the present disclosure, the user information comprises user features, and the user features comprise a movement feature, a figure feature, a heart rate feature and/or a respiration feature. The step of determining the user information based on the microwave data comprises: determine a movement feature and a figure feature based on a phase difference; and determine a heart rate feature and a respiration feature based on a waveform.

In an embodiment of the present disclosure, the microwave sensor comprises a millimeter wave radar, and the microwave sensor constantly emits microwave signals outwards and receives corresponding reflected signals.

When no human body passes, the phase difference between the received reflected signals and the transmitted signals are fixed. When a human body passes, since part of microwave signals are reflected by the human body, the phase difference between the reflected signals and the emitted signals at the position of the human body changes, and movement data of the human body, such as a movement direction and a movement speed, and contour data of the human body, such as height data and figure data can be acquired based on the phase difference.

Different users have different figures and different walking features. Therefore, an identity of a user near the water consumption area can be accurately identified by acquiring movement features comprising a movement direction, a movement speed, etc. and combining figure features such as height data and figure data.

Moreover, the waveforms of the reflected signals are related to an object reflecting the signals. Respiration and heartbeats of different users can cause micro vibrations of bodies, and frequencies and amplitudes of the micro vibrations caused by the respiration and heartbeats are different. Further, the microwave sensor such as a millimeter wave radar, in an embodiment, a frequency modulated continuous wave (FMCW) microwave sensor has high detection accuracy, and these micro vibrations are expressed in forms of waveform changes in detection data of the FMCW microwave sensor.

Therefore, by collecting and analyzing a waveform of reflected signals, a heart rate, respiration and other data of a target human body can be obtained. The heart rate features and respiration features of different users are further different. Therefore, based on the acquired movement feature and figure feature and in combination with the heart rate feature and respiration feature, the identity of the user passing the control device can be extremely accurately acquired, and user information can be determined. The working parameters most according with water consumption habits of the user are determined based on the user information, and current working parameters of the water heater are automatically adjusted and the user is not required to manually control work of the water heater, and convenience of using the water heater is effectively improved.

In some embodiments of the present disclosure, a control method for a water heater system is provided. The water heater system comprises a control device, and the control device comprises a microwave sensor. FIG. 8 shows a flow diagram of a control method for a water heater system according to an embodiment of the present disclosure. As shown in FIG. 8, the control method comprises:
step 802: collect user image information; where
the user image information comprises user features;
step 804: control, in response to the user image information, a water heater to work; and
step 806: adjust a working parameter of the water heater based on user features.

In an embodiment of the present disclosure, in a working process of the water heater, image information of a user passing or approaching the water consumption area is collected by the image sensor arranged on the control device. In an embodiment, the water consumption area comprises an area where a user uses hot water provided by a water heater, such as a toilet, a bathroom, a washbasin and a kitchen sink.

After the user image information is detected, it is indicated that the user arrives at the water consumption area, which represents that the user may have a water demand. In this case, the water heater is controlled, on the basis of the user information, to start working. In a case that the water heater is in a standby state, after user image information is detected, the water heater is controlled to enter a working state and hot water can be produced.

In a case that the water heater is already in the working state, after the user image information is received, the water heater can enter a mode of preparing for water supply and turns on a switch of the zero cold water function, for example. The zero cold water function refers to a function that a circulating pump is arranged on the water heater, remaining water in a hot water pipeline between the water heater and the water consumption area where the user is located is pumped back into the water heater by the circulating pump to be reheated, and new hot water produced by a wall-mounted gas boiler is continuously injected into the hot water pipeline between the water heater and the water consumption area where the user is located and remaining water in the pipeline can be circularly replaced with newly produced hot water. Therefore, when the user turns on a faucet or a shower, water firstly flowing out is hot water satisfying demand of the user, rather than cold water having a temperature lowered due to too long retention time, and the zero cold water function is achieved.

An identity of a user currently approaching or located in the water consumption area is identified by user features comprised in the user image information, working parameters most according with water consumption habits of the user are determined in combination with historical water consumption habits (such as a water temperature and an outlet water flow quantity) of the user and current environment information (such as a season, time in a day and an indoor temperature) and on the basis of a database generated by big data, and current working parameters of the water heater are adjusted.

Therefore, when different users use hot water, no user is required to manually set the working parameters of the water heater, and hot water according with usage habits of the user can be obtained by directly turning on the faucet.

In an embodiment, for instance, the control device for a water heater is arranged at a door of a bathroom. Since the bathroom generally employs a dry-wet separation design, the control device can be arranged at a dry area outside a wet area of the bathroom or at a door of the dry area. When the user arrives at the dry area, the control device can detect the user image information of the user and determine that the user needs to take a bath. In this case, since operating parameters of the water heater are set in advance, the user is not required to manually adjust the water heater, and can directly enter a bath at a proper water temperature. Moreover, the control device is located outside the wet area, and the image sensor does not collect data in a process that the user takes a bath and personal privacy of the user can be protected.

According to an embodiment of the present disclosure, the control device for a water heater is arranged, and an identity of a user is determined based on the user image information and real-time working parameters of the water heater can be automatically adjusted when a user needs water, the user is not required to manually control work of the water heater, and convenience of using the water heater is effectively improved.

In some embodiments of the present disclosure, the step of collecting user image information comprises: collect image information of an entrance of a water consumption area; identify the image information, and determine a human image comprised in the image information; and determine the user image information based on the human image.

In an embodiment of the present disclosure, an image sensor is arranged on the control device for a water heater, the image sensor may be a natural light image sensor, to acquire photo or video information of the human body, and the image sensor may further be an infrared image sensor, to acquire an infrared photo of the human body.

After the image information comprising the human body of the user is captured, the image information is identified through an image processing or image recognition algorithm and the human image therein can be obtained. In an embodiment, the human image comprises a human body image, a face image, etc. By further processing the human image, corresponding user image information is obtained.

In an embodiment, the user image information comprises user features. The user features comprise a face feature. After the image sensor captures an image comprising a human body, face recognition is carried out on a human face in the image, and the identity of the user is determined based on a result of the face recognition and working parameters of the water heater matching the identity of the user can be obtained.

The user features further comprise a gait feature. In an embodiment, the gait feature refers to information such as a working posture, a stride and a stride frequency. When a human body passes the control device, walking videos of the human body are collected, and gait data of the human body is analyzed and an identity of a user corresponding to the gait feature can be obtained. Therefore, in a case that a front face of the user cannot be captured, it is still ensured that the identity of the user can be accurately identified and working parameters of the water heater matching the identity of the user can be obtained.

The user features further comprise a figure feature. In an embodiment, the figure feature comprises body information such as a height and a shoulder width of the user. After the image sensor captures an image comprising a human body, image recognition is carried out on the human body and a corresponding figure feature can be obtained. Further, an identity of a user can be determined based on the figure feature, and working parameters of the water heater matching the identity of the user can be obtained.

In some embodiments of the present disclosure, the step of adjusting a working parameter of the water heater based on the user features comprises: collect environment information, where the environment information comprises environment temperature information and/or time information; determine a target parameter based on the user features and the environment information; and adjust the working parameter based on the target parameter.

In an embodiment of the present disclosure, when the working parameter of the water heater is adjusted, a target parameter is determined based on an environment parameter of a current environment, and the user features acquired by the control device for a water heater.

In an embodiment, the environment information comprises environment temperature information, such as an indoor temperature and an outdoor temperature. Since the indoor temperature and the outdoor temperature will affect a body temperature of the user, demand of the user for a hot water temperature will change. For instance, if a room temperature is low, the user may expect higher water temperature; and if the room temperature is high, the user may expect lower water temperature.

The environment information further comprises time information, such as time in a day and a month in a year. Different time represents different user states. For instance, in the daytime, when the user may be in a working or living state, the water may be used for work or living, such as water for cleaning objects and cooking, and a required water temperature is lower. When the user may need to rest after washing at night, a required water temperature is high.

Different months represent different seasons, and a user needs different water temperatures in different seasons. For instance, a higher water temperature is required in winter and a lower water temperature is required in summer.

Therefore, in combination with the environment parameters and the user features, actual demand of different users in different scenarios can be accurately reflected and outlet water temperatures of the water heater can always satisfy the actual demand of the users in different situations, and use experience of the water heater can be improved.

In some embodiments of the present disclosure, the step of determining a target parameter based on the user image information and the environment information comprises: acquire a database, where the database comprises mapping relations of a plurality of user features, a plurality of pieces of environment information and a plurality of preset working parameters; and determine the target parameter from the plurality of preset working parameters based on the user features, the environment information and the database.

In an embodiment of the present disclosure, the control device for a water heater continuously collects user features of different users and water consumption habits of different users in a case of different environment information. In an embodiment, when water consumption of a certain user is collected, the control device stores user features of the user and current environment information, sets the user features and the current environment information as a user event, stores, after the user uses water, actual working parameters of the water heater when the user uses water, and stores the actual working parameters in association with the above user time and a user water consumption history record can be obtained.

By continuously accumulating user water history records, a historical record data set is formed. The historical record data set is processed by a big data model and optimal working parameters of each user in different environments can be obtained. A database is finally formed, and corresponding working parameters of each user in different environments are stored in the database.

Therefore, after the user features are identified and current environment information is acquired, corresponding target parameters can be found in the database by the user features and the current environment information, and the water heater can be controlled to work by the target parameters and actual water demand of the user can be satisfied.

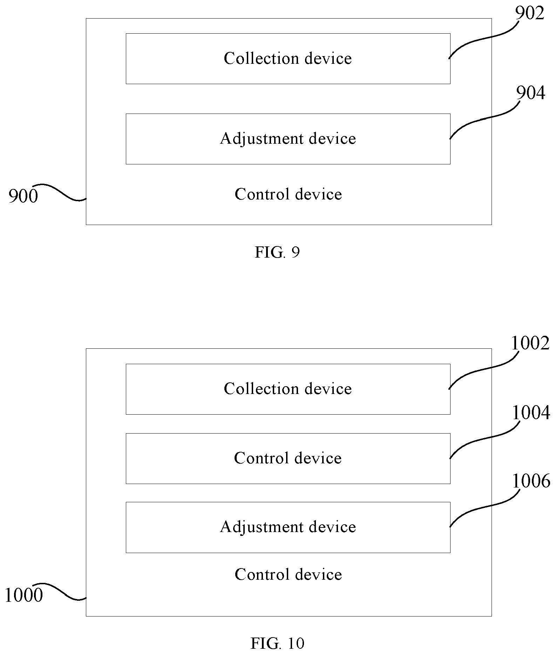

In some embodiments of the present disclosure, a control unit for a water heater system is provided. FIG. 9 shows a structural block diagram of a control device according to an embodiment of the present disclosure. As shown in FIG. 9, the control device 900 comprises:
a collection module 902, which is configured to control a microwave sensor to collect microwave data of a water consumption area; and
an adjustment module 904, which is configured to determine user information based on the microwave data and adjust a working parameter of the water heater based on the user information.

In an embodiment of the present disclosure, the control device for a water heater is configured to control operation and work of the water heater, comprising controlling startup and shutdown of the water heater or adjusting a working parameter of the water heater. The working parameters comprise a target outlet water temperature of the water heater, a parameter indicating whether to start heating water supply, a parameter indicating whether to start a zero cold water function, etc.

The control device may be arranged in or near a water consumption area. In an embodiment, the water consumption area comprises an area where a user uses hot water provided by a water heater, such as a toilet, a bathroom, a washbasin and a kitchen sink. By arranging the control device in these water consumption areas, the user can conveniently adjust a water temperature, a function switch and other working parameters of the water heater at any time.

A microwave sensor is further arranged on the control device. In an embodiment, the microwave sensor belongs to a microwave radar apparatus, such as a millimeter wave radar. By the microwave sensor, information of a moving object, that is, information of a human body can be detected. Reflected signals of the water consumption area are collected by the microwave sensor, and when the human body passes, phases of the reflected signals change and a movement direction and a movement speed of the human body can be obtained. Moreover, a distance between the human body and the control device, and other information of the human body, such as a height and a figure can be obtained and user information corresponding to the human body can be obtained.

Since the control device is arranged in or near the water consumption area, after receiving the user information, the control device can determine that the user arrives at the water consumption area, which represents that the user may have a water demand. In this case, the control device controls, on the basis of the user information, the water heater to start working. In a case that the water heater is in a standby state, after receiving user information, the control device controls the water heater to enter a working state and hot water can be produced.

In a case that the water heater is already in the working state, after receiving user information, the water heater can enter a mode of preparing for water supply and turns on a switch of the zero cold water function, for example. The zero cold water function refers to a function that a circulating pump is arranged on the water heater, remaining water in a hot water pipeline between the water heater and the water consumption area where the user is located is pumped back into the water heater by the circulating pump to be reheated, and new hot water produced by a wall-mounted gas boiler is continuously injected into the hot water pipeline between the water heater and the water consumption area where the user is located and remaining water in the pipeline can be circularly replaced with newly produced hot water. Therefore, when the user turns on a faucet or a shower, water firstly flowing out is hot water satisfying demand of the user, rather than cold water having a temperature lowered due to too long retention time, and the zero cold water function is achieved.

Moreover, after acquiring the user information, a main control assembly identifies an identity of a user currently approaching or located in the water consumption area by the user information, determines, in combination with historical water consumption habits (such as a water temperature and an outlet water flow quantity) of the user and current environment information (such as a season, time in a day and an indoor temperature) and on the basis of a database generated by big data, working parameters most according with water consumption habits of the user, and adjusts current working parameters of the water heater.

Therefore, when different users use hot water, no user is required to manually set the working parameters of the water heater, and hot water according with usage habits of the user can be obtained by directly turning on the faucet.

In an embodiment, for instance, the control device for a water heater is arranged at a door of a bathroom. Since the bathroom generally employs a dry-wet separation design, the control device can be arranged at a dry area outside a wet area of the bathroom or at a door of the dry area. When the user arrives at the dry area, the control device can detect the user information of the user and determine that the user needs to take a bath. In this case, since operating parameters of the water heater are set in advance, the user is not required to manually adjust the water heater, and can directly enter a bath at a proper water temperature. Moreover, the microwave sensor does not acquire an image of the user and personal privacy of the user can be protected.

According to an embodiment of the present disclosure, the control device for a water heater is arranged, the user information is collected by the microwave sensor of the control device, and an identity of a user is determined based on the user information and real-time working parameters of the water heater can be automatically adjusted when a user needs water, the user is not required to manually control work of the water heater, and convenience of using the water heater is effectively improved.

In some embodiments of the present disclosure, the microwave sensor is controlled, and the collection module is further configured to control the microwave sensor to emit microwave signals and collect reflected signals of the microwave signals. The control device further comprises an acquisition device, which is configured to acquire a phase difference between the reflected signals and the microwave signals; and a determination device, which is configured to determine microwave data based on a waveform of the reflected signals and the phase difference.

In an embodiment of the present disclosure, the microwave sensor belongs to a microwave radar apparatus, such as a millimeter wave radar. Information of a moving object can be detected by the microwave sensor. In an embodiment, the microwave sensor constantly emits microwave signals and receives reflected signals.

There is a certain phase difference between the reflected signals and the emitted microwave signals, and the phase difference can reflect a position of the object reflecting the reflected signals from the microwave sensor. Based on the continuous phase difference between the reflected signals and the microwave signals, movement data and figure data of the human body passing the microwave sensor, that is, passing the control device can be obtained.

Moreover, the waveform of the reflected signals is related to a shape of the object reflecting the signals and whether the object vibrates. Therefore, when the human body reflects the microwave signals, the waveform of the reflected signals change based on vibrations of the human body caused by respiration and movement of the human body.

Therefore, based on the phase difference between the waveform of reflected microwaves and the waveform of emitted microwaves, and the waveform of the reflected signals, feature data of the human body of the user passing or approaching the control device can be accurately reflected and corresponding user information can be determined. An identity of the user can be determined based on the user information, and a working parameter of the water heater can be automatically adjusted based on the identity of the user and the working parameter satisfies current user demand. The user is not required to manually control work of the water heater, and convenience of using the water heater is effectively improved.

In some embodiments of the present disclosure, the collection module is further configured to collect environment information, where the environment information comprises environment temperature information and/or time information; the determination device is further configured to determine target parameters based on the user information and the environment information; and the adjustment module is further configured to adjust the working parameters based on the target parameters.

In an embodiment of the present disclosure, when the working parameter of the water heater is adjusted, a target parameter is determined based on an environment parameter of a current environment and user information acquired by the control device for a water heater.

In an embodiment, the environment information comprises environment temperature information, such as an indoor temperature and an outdoor temperature. Since the indoor temperature and the outdoor temperature will affect a body temperature of the user, demand of the user for a hot water temperature will change. For instance, if a room temperature is low, the user may expect higher water temperature; and if the room temperature is high, the user may expect lower water temperature.

The environment information further comprises time information, such as time in a day and a month in a year. Different time represents different user states. For instance, in the daytime, when the user may be in a working or living state, the water may be used for work or living, such as water for cleaning objects and cooking, and a required water temperature is lower. When the user may need to rest after washing at night, a required water temperature is high.

Different months represent different seasons, and a user needs different water temperatures in different seasons. For instance, a higher water temperature is required in winter and a lower water temperature is required in summer.

Therefore, in combination with the environment parameter and the user information, actual demand of different users in different scenarios can be accurately reflected and outlet water temperatures of the water heater can always satisfy the actual demand of the users in different situations, and use experience of the water heater can be improved.

In some embodiments of the present disclosure, the user information comprises user features, and the user features comprise a movement feature, a figure feature, a heart rate feature and/or a respiration feature; the determination device is further configured to determine a movement feature and a figure feature based on the phase difference; and determine a heart rate feature and a respiration feature based on the waveform.

In an embodiment of the present disclosure, the microwave sensor comprises a millimeter wave radar, and the microwave sensor constantly emits microwave signals outwards and receives corresponding reflected signals.

When no human body passes, the phase difference between the received reflected signals and the transmitted signals are fixed. When a human body passes, since part of microwave signals are reflected by the human body, the phase difference between the reflected signals and the emitted signals at the position of the human body changes, and movement data of the human body, such as a movement direction and a movement speed, and contour data of the human body, such as height data and figure data can be acquired based on the phase difference.

Different users have different figures and different walking features. Therefore, an identity of a user near the water consumption area can be accurately identified by acquiring movement features comprising a movement direction, a movement speed, etc. and combining figure features such as height data and figure data.

Moreover, the waveforms of the reflected signals are related to an object reflecting the signals. Respiration and heartbeats of different users can cause micro vibrations of bodies, and frequencies and amplitudes of the micro vibrations caused by the respiration and heartbeats are different. Further, the microwave sensor such as a millimeter wave radar, in an embodiment, a frequency modulated continuous wave (FMCW) microwave sensor has high detection accuracy, and these micro vibrations are expressed in forms of waveform changes in detection data of the FMCW microwave sensor.

Therefore, by collecting and analyzing a waveform of reflected signals, a heart rate, respiration and other data of a target human body can be obtained. The heart rate features and respiration features of different users are further different. Therefore, based on the acquired movement feature and figure feature and in combination with the heart rate feature and respiration feature, the identity of the user passing the control device can be extremely accurately acquired, and user information can be determined. The working parameters most according with water consumption habits of the user are determined based on the user information, and current working parameters of the water heater are automatically adjusted and the user is not required to manually control work of the water heater, and convenience of using the water heater is effectively improved.

In some embodiments of the present disclosure, a control unit for a water heater system is provided. FIG. 10 shows a structural block diagram of a control unit for a water heater system according to an embodiment of the present disclosure. As shown in FIG. 10, the control unit 1000 comprises:
a collection module 1002, which is configured to collect user image information, where the user image information comprises user features;
a control module 1004, which is configured to control, based on the user image information, the water heater to work; and
an adjustment module 1006, which is configured to adjust a working parameter of the water heater based on the user features.

In an embodiment of the present disclosure, in a working process of the water heater, image information of a user passing or approaching the water consumption area is collected by the image sensor arranged on the control module. In an embodiment, the water consumption area comprises an area where a user uses hot water provided by a water heater, such as a toilet, a bathroom, a washbasin and a kitchen sink.

After the user image information is detected, it is indicated that the user arrives at the water consumption area, which represents that the user may have a water demand. In this case, the water heater is controlled, on the basis of the user information, to start working. In a case that the water heater is in a standby state, after user image information is detected, the water heater is controlled to enter a working state and hot water can be produced.

In a case that the water heater is already in the working state, after the user image information is received, the water heater can enter a mode of preparing for water supply and turns on a switch of the zero cold water function, for example. The zero cold water function refers to a function that a circulating pump is arranged on the water heater, remaining water in a hot water pipeline between the water heater and the water consumption area where the user is located is pumped back into the water heater by the circulating pump to be reheated, and new hot water produced by a wall-mounted gas boiler is continuously injected into the hot water pipeline between the water heater and the water consumption area where the user is located and remaining water in the pipeline can be circularly replaced with newly produced hot water. Therefore, when the user turns on a faucet or a shower, water firstly flowing out is hot water satisfying demand of the user, rather than cold water having a temperature lowered due to too long retention time, and the zero cold water function is achieved.

An identity of a user currently approaching or located in the water consumption area is identified by user features comprised in the user image information, working parameters most according with water consumption habits of the user are determined in combination with historical water consumption habits (such as a water temperature and an outlet water flow quantity) of the user and current environment information (such as a season, time in a day and an indoor temperature) and on the basis of a database generated by big data, and current working parameters of the water heater are adjusted.

Therefore, when different users use hot water, no user is required to manually set the working parameters of the water heater, and hot water according with usage habits of the user can be obtained by directly turning on the faucet.

In an embodiment, for instance, the control device for a water heater is arranged at a door of a bathroom. Since the bathroom generally employs a dry-wet separation design, the control device can be arranged at a dry area outside a wet area of the bathroom or at a door of the dry area. When the user arrives at the dry area, the control device can detect the user image information of the user and determine that the user needs to take a bath. In this case, since operating parameters of the water heater are set in advance, the user is not required to manually adjust the water heater, and can directly enter a bath at a proper water temperature. Moreover, the control device is located outside the wet area, and the image sensor does not collect data in a process that the user takes a bath and personal privacy of the user can be protected.

In some embodiments of the present disclosure, the collection module is further configured to collect image information of an entrance of the water consumption area; the control device further comprises an identification device, which is configured to identify image information and determine a human image comprised in the image information; and a determination device configured to determine user image information based on the human image.

In an embodiment of the present disclosure, an image sensor is arranged on the control device for a water heater, the image sensor may be a natural light image sensor, to acquire photo or video information of the human body, and the image sensor may further be an infrared image sensor, to acquire an infrared photo of the human body.

After the image information comprising the human body of the user is captured, the image information is identified through an image processing or image recognition algorithm and the human image therein can be obtained. In an embodiment, the human image comprises a human body image, a face image, etc. By further processing the human image, corresponding user image information is obtained.

In an embodiment, the user image information comprises user features. The user features comprise a face feature. After the image sensor captures an image comprising a human body, face recognition is carried out on a human face in the image, and the identity of the user is determined based on a result of the face recognition and working parameters of the water heater matching the identity of the user can be obtained.

The user features further comprise a gait feature. In an embodiment, the gait feature refers to information such as a working posture, a stride and a stride frequency. When a human body passes the control device, walking videos of the human body are collected, and gait data of the human body is analyzed and an identity of a user corresponding to the gait feature can be obtained. Therefore, in a case that a front face of the user cannot be captured, it is still ensured that the identity of the user can be accurately identified and working parameters of the water heater matching the identity of the user can be obtained.

The user features further comprise a figure feature. In an embodiment, the figure feature comprises body information such as a height and a shoulder width of the user. After the image sensor captures an image comprising a human body, image recognition is carried out on the human body and a corresponding figure feature can be obtained. Further, an identity of a user can be determined based on the figure feature, and working parameters of the water heater matching the identity of the user can be obtained.

In some embodiments of the present disclosure, the collection module is further configured to collect environment information, where the environment information comprises environment temperature information and/or time information; the determination device is further configured to determine target parameters based on user features and environment information; and the adjustment module is further configured to adjust working parameters based on the target parameters.

In an embodiment of the present disclosure, when the working parameter of the water heater is adjusted, a target parameter is determined based on an environment parameter of a current environment, and the user features acquired by the control device for a water heater.

In an embodiment, the environment information comprises environment temperature information, such as an indoor temperature and an outdoor temperature. Since the indoor temperature and the outdoor temperature will affect a body temperature of the user, demand of the user for a hot water temperature will change. For instance, if a room temperature is low, the user may expect higher water temperature; and if the room temperature is high, the user may expect lower water temperature.

The environment information further comprises time information, such as time in a day and a month in a year. Different time represents different user states. For instance, in the daytime, when the user may be in a working or living state, the water may be used for work or living, such as water for cleaning objects and cooking, and a required water temperature is lower. When the user may need to rest after washing at night, a required water temperature is high.

Different months represent different seasons, and a user needs different water temperatures in different seasons. For instance, a higher water temperature is required in winter and a lower water temperature is required in summer.

Therefore, in combination with the environment parameters and the user features, actual demand of different users in different scenarios can be accurately reflected and outlet water temperatures of the water heater can always satisfy the actual demand of the users in different situations, and use experience of the water heater can be improved.

In some embodiments of the present disclosure, the control device further comprises: an acquisition device, which is configured to acquire a database, where the database comprises mapping relations of a plurality of user features, a plurality of pieces of environment information and a plurality of preset working parameters; and the determination device is further configured to determine the target parameters from the plurality of preset working parameters based on the user features, the environment information and the database.

In an embodiment of the present disclosure, the control device for a water heater continuously collects user features of different users and water consumption habits of different users in a case of different environment information. In an embodiment, when water consumption of a certain user is collected, the control device stores user features of the user and current environment information, sets the user features and the current environment information as a user event, stores, after the user uses water, actual working parameters of the water heater when the user uses water, and stores the actual working parameters in association with the above user time and a user water consumption history record can be obtained.

By continuously accumulating user water history records, a historical record data set is formed. The historical record data set is processed by a big data model and optimal working parameters of each user in different environments can be obtained. A database is finally formed, and corresponding working parameters of each user in different environments are stored in the database.

Therefore, after the user features are identified and current environment information is acquired, corresponding target parameters can be found in the database by the user features and the current environment information, and the water heater can be controlled to work by the target parameters and actual water demand of the user can be satisfied.

In some embodiments of the present disclosure, a control unit for a water heater system is provided. The control device comprises: a memory, which is configured to store a program or an instruction; and a processor, which is configured to implement steps of the control method for a water heater system provided in any one of the above embodiments when executing the program or the instruction. Therefore, the control unit for a water heater system further comprises all beneficial effects of the control method for a water heater system provided in any one of the above embodiments, which will not be repeated herein for avoidance of repetition.

In some embodiments of the present disclosure, a computer-readable storage medium is provided. The computer-readable storage medium stores a program or an instruction, where the program or the instruction implements steps of the control method for a water heater system provided in any one of the above embodiments when executed by a processor. Therefore, the computer-readable storage medium further comprises all beneficial effects of the control method for a water heater system provided in any one of the above embodiments, which will not be repeated herein for avoidance of repetition.

In some embodiments of the present disclosure, a water heater system is provided. The water heater system comprises a control unit for a water heater system provided in any one of the above embodiments; and/or the computer-readable storage medium provided in any one of the above embodiments. Therefore, the water heater system further comprises all beneficial effects of the control unit for a water heater system provided in any one of the above embodiments and/or the computer-readable storage medium provided in any one of the above embodiments, which will not be repeated herein for avoidance of repetition.

In the description of the present disclosure, the term "plurality" refers to two or more, and unless explicitly defined otherwise, orientations or positional relations indicated by the terms "upper", "lower", etc. are based on the orientations or positional relations shown in the accompanying drawings, and are only for facilitating the description of the present disclosure and simplifying the description, rather than indicating or implying that a device or element referred to must have a particular orientation or be constructed and operated in a particular orientation, and therefore cannot be interpreted as limiting the present disclosure. The terms "connected", "mounted", "fixed", etc. should be understood in a broad sense. For instance, "connected" can indicate fixed connection, removable connection or integral connection; or direct connection or indirect connection via an intermediary medium. Those of ordinary skill in the art can understand the specific meanings of the above terms in the present disclosure according to specific circumstances.

In the description of the present disclosure, the terms "an embodiment", "some embodiments", "particular embodiments", etc. mean that a specific feature, structure, material or characteristic described in combination with the embodiment or instance is comprised in at least one embodiment or instance of the present disclosure. In the present disclosure, the illustrative expression of the above terms does not necessarily refer to the same embodiment or instance. Moreover, the specific feature, structure, material or characteristic described can be combined in a suitable manner in any one or more embodiment or instances.

The above embodiments are merely some embodiments of the present disclosure, and are not intended to limit the present disclosure. Those skilled in the art can make various modifications and changes on the present disclosure. Any modification, equivalent substitution, improvement, etc. within the spirit and principles of the present disclosure should fall within the scope of protection of the present disclosure.

## Claims

1. A control device for a water heater, comprising:
a body;
a microwave sensor, which is arranged on the body and collects a microwave data; and
a controller, which is arranged in the body, connected to the microwave sensor and
determines a user information based on the microwave data and adjusts a working parameter of the water heater based on the user information.

2. The control device according to claim 1, wherein the user information comprises a user feature, and the user feature comprise a movement feature, a figure feature, a heart rate feature and/or a respiration feature.

3. A control device for a water heater, comprising:
a body;
an image sensor, which is arranged on the body and configured to acquire user image information, wherein the user image information comprises user features; and
a controller, which is arranged in the body, connected to the image sensor, configured to control, according to the user image information, the water heater to work, and configured to adjust a working parameter of the water heater according to the user features.

4. The control device according to claim 3, wherein the user features comprise a face feature, a gait feature and/or a figure feature.

5. The control device according to any one of claims 1 to 4, further comprising:
a first communication device, which is connected to the controller; and
a communication line, which is connected to the first communication device and the water heater.

6. The control device according to any one of claims 1 to 4, further comprising:
a second communication device, which is connected to the controller and establishes a wireless communication channel with the water heater.

7. The control device according to claim 6, wherein the second communication device comprises one or more of the following:
a Bluetooth communication device, a Wi-Fi communication device and a radio frequency communication device.

8. A water heater system, comprising:
a water heater; and
a control device according to any one of claims 1 to 7, which carries out data and instruction mutual interaction with the water heater.

9. The water heater system according to claim 8, further comprising:
a water outlet assembly, which is connected to the water heater and arranged in a water consumption area; wherein
the control apparatus is arranged outside the water consumption area and faces an entrance of the water consumption area.

10. The water heater system according to claim 8, further comprising:
a water outlet assembly, which is connected to the water heater and arranged in a water consumption area; wherein
the control device faces the water consumption area.

11. A control method for a water heater system, wherein the water heater system comprises a controller, the controller comprises a microwave sensor, and the control method comprises:
controlling the microwave sensor to collect a microwave data of a water consumption area; and
determining a user information based on the microwave data, and adjusting a working parameter of the water heater based on the user information.

12. The control method according to claim 11, wherein the step of controlling the microwave sensor to collect a microwave data of a water consumption area comprises:
controlling the microwave sensor to emit a microwave signal and collect a reflected signal of the microwave signal;
acquiring a phase difference between the reflected signal and the microwave signal;
determining the microwave data based on a waveform of the reflected signal and the phase difference.

13. The control method according to claim 12, wherein the step of adjusting a working parameter of the water heater based on the user information comprises:
collecting an environment information, wherein the environment information comprises an environment temperature information and/or a time information;
determining a target parameter based on the user information and the environment information; and
adjusting the working parameter based on the target parameter.

14. The control method according to claim 13, wherein the user information comprises a user feature, and the user feature comprise a movement feature, a figure feature, a heart rate feature and/or a respiration feature; and
the step of determining a user information based on the microwave data comprises:
determining the movement feature and the figure feature based on the phase difference; and
determining the heart rate feature and the respiration feature based on the waveform.

15. A control method for a water heater system, comprising:
collecting user image information, wherein the user image information comprises user features;
controlling, according to the user image information, a water heater to work; and
adjusting a working parameter of the water heater according to the user features.

16. The control method according to claim 15, wherein the collecting user image information comprises:
collecting image information of an entrance of a water consumption area;
identifying the image information and determining a human image comprised in the image information; and
determining the user image information according to the human image.

17. The control method according to claim 16, wherein the adjusting a working parameter of the water heater according to the user features comprises:
collecting environment information, wherein the environment information comprises environment temperature information and/or time information;
determining a target parameter according to the user features and the environment information; and
adjusting the working parameter according to the target parameter.

18. The control method according to claim 17, wherein determining a target parameter according to the user image information and the environment information comprises:
acquiring a database, wherein the database comprises mapping relations of a plurality of user features, a plurality of pieces of environment information and a plurality of preset working parameters; and
determining the target parameter from the plurality of preset working parameters according to the user features, the environment information and the database.

19. A control unit for a water heater system, comprising:
a collection module , which is configured to control a microwave sensor to collect a microwave data of a water consumption area; and
an adjustment module , which is configured to determine a user information based on the microwave data and adjust a working parameter of the water heater based on the user information.

20. A control device for a water heater system, wherein the water heater system comprises a controller, the controller comprises a microwave sensor, and the control device comprises:
a collection module, which is configured to collect user image information, wherein the user image information comprises user features;
a control module, which is configured to control, according to the user image information, the water heater to work; and
an adjustment module, which is configured to adjust a working parameter of the water heater according to the user features.

21. A control unit for a water heater system, comprising:
a memory, which is configured to store a program or an instruction; and
a processor, which is configured to implement a control method according to any one of claims 11 to 18 when executing the program or the instruction.

22. A computer-readable storage medium, storing a program or an instruction, wherein the program or the instruction implements a control method according to any one of claims 11 to 18 when executed by a processor.

23. A water heater system, comprising:
a control unit according to any one of claims 19 to 21; and/or
a computer-readable storage medium according to claim 22.
